Europäisches Patentamt

European Patent Office

Office européen des brevets

(19)

(11) **EP 0 621 729 B1**

(12) **EUROPÄISCHE PATENTSCHRIFT**

(45) Veröffentlichungstag und Bekanntmachung des Hinweises auf die Patenterteilung:
**25.02.1998 Patentblatt 1998/09**

(51) Int Cl.⁶: **H04N 5/45**

(21) Anmeldenummer: **94104892.8**

(22) Anmeldetag: **28.03.1994**

(54) **Einrichtung zum Darstellen eines ersten Bildes und eines zweiten Bildes auf einem Bilschirm**

Device for display of a first picture in a second picture on a screen

Dispositif de visualisation sur écran d'une première image dans une seconde image

(84) Benannte Vertragsstaaten:
**DE ES FR GB IT**

(30) Priorität: **22.04.1993 DE 4313228**

(43) Veröffentlichungstag der Anmeldung:
**26.10.1994 Patentblatt 1994/43**

(73) Patentinhaber: **SIEMENS AKTIENGESELLSCHAFT**
**80333 München (DE)**

(72) Erfinder: **Mende, Manfred**
**D-82008 Unterhaching (DE)**

(56) Entgegenhaltungen:
**EP-A- 0 281 116          EP-A- 0 443 064**
**US-A- 4 721 943**

- **PATENT ABSTRACTS OF JAPAN vol. 10, no. 125 (E-402) 10. Mai 1986 & JP-A-60 257 682 (MATSUSHITA DENKI SANGYO K.K.) 19. Dezember 1985**
- **PATENT ABSTRACTS OF JAPAN vol. 10, no. 251 (E-432) 28. August 1986 & JP-A-61 080 977 (TOSHIBA CORP.) 24. April 1986**

**Beschreibung**

Die Erfindung betrifft eine Einrichtung zum Darstellen eines ersten Bildes und eines zweiten Bildes auf einem Bildschirm nach dem Oberbegriff des Anspruchs 1.

Eine solche Einrichtung ist beispielsweise aus Siemens Components, Heft 1, 1990 bekannt. Als wesentlichen Bestandteil weist diese Anordnung einen Bild-im-Bild-Prozessor (SDA 9088) von Siemens auf, der die Einblendung eines verkleinerten Bildes in ein größeres Hauptbild ermöglicht. Beide Bildquellen können dabei völlig unabhängig bezüglich der Fernsehnorm und Synchronisation gewählt sein. Der Bild-im-Bild-Prozessor übernimmt die Bildverkleinerung, die Zwischenspeicherung dieses verkleinerten Bildes in einem integrierten Bildspeicher sowie die Ausgabe der Bilddaten dieses verkleinerten Bildes über eine Digital-Analog-Umsetzstufe, so daß das Bildsignal für das verkleinerte Bild am Ausgang des Bild-im-Bild-Prozessors in analoger Form vorliegt.

Die zweite Bildverarbeitungsstufe, die aus einer zweiten Videosignalquelle Bildsignale für das zweite Bild bereitstellt, kann grundsätzlich analog oder digital aufgebaut sein. Der Aufbau und die Wirkungsweise einer solchen zweiten Bildsignalverarbeitungsstufe in digitaler Form ist beispielsweise in Siemens Components, Heft 6, 1988 auf den Seiten 240 bis 245 beschrieben. Am Ausgang dieser zweiten Bildverarbeitungsstufe sind bei diesem bekannten System analoge Bildsignale abgreifbar. Eine Umschalteinrichtung am Ausgang der ersten und zweiten Bildverarbeitungsstufe sorgt für ein zeitrichtiges Umschalten zwischen den Bildsignalen für das verkleinerte erste Bild und das zweite Hauptbild, so daß am Bildschirm des Fernsehgerätes ein in ein Großbild dargestelltes Kleinbild sichtbar wird.

Es hat sich gezeigt, daß diese Anordnung im Hinblick auf gleichmäßige Amplituden der ersten Bildsignale und zweiten Bildsignale problematisch ist. So können bei der Bild-im-Bild-Darstellung unerwünschte Kontrastunterschiede zwischen dem Kleinbild und dem Großbild auftreten, die für den Betrachter unangenehm und störend wirken. Außerdem war es für den Betrachter des Bildschirms bei der Bild-im-Bild-Einblendung nach dem bisher beschriebenen Konzept nicht möglich, den Kontrast des Kleinbildes nach seinen individuellen Wünschen, beispielsweise über seine Fernbedienung, einzustellen.

Eine Möglichkeit, den Kontrast eines Kleinbildes einstellbar zu machen, ist bereits in Funkschau, Heft 21, 1989, auf den Seiten 53 bis 55 beschrieben worden. Dort wird die Kontrasteinstellung im digitalen Farbdecoder und damit am Eingang der digitalen Signalverarbeitung der Bildsignale vorgenommen, was schaltungstechnisch nur aufwendig zu realisieren ist.

Eine weitere Möglichkeit zur Kontrasteinstellung würde darin bestehen, in die Umschalteinrichtung eine Amplitudenregelung sowohl für das erste als auch für das zweite Bildsignal vorzusehen. Dies wurde aber zwangsweise zu einer hinsichtlich seines schaltungstechnischen Aufbaus aufwendigen Umschalteinrichtung, die damit teuer ist, führen.

Eine im Vergleich zu diesen bekannten Einrichtungen einfache Kontrasteinstellung des einzublendenden Bildes ist aus der EP-A-0 443 064 bekannt.

Die Schaltung einer D/A Umsetzstufe mit schaltbaren Stromquellen und einer zusätzlichen Regelung der Stromquellen ist aus der EP-A-0 281 116 bekannt.

Die Einrichtung gemäß der EP-A-0 443 064 weist eine erste Bildverarbeitungsstufe zum Erzeugen von ersten Bildsignalen und eine zweite Bildverarbeitungsstufe zum Erzeugen von zweiten Bildsignalen sowie eine Umschalteinrichtung zum Umschalten zwischen diesen ersten und zweiten Bildsignalen auf. Um den Kontrast der ersten Bildsignale individuell einstellen zu können, ist an eine ausgangsseitig an die erste Bildverarbeitungsstufe geschaltete D/A-Stufe mindestens ein variables Referenzsignal zuführbar, das von einer Steuereinrichtung nach Maßgabe digitaler Steuersignale einstellbar ist.

Es hat sich herausgestellt, daß die hierbei verwendeten üblicherweise in integrierter Schaltungstechnik realisierten D/A-Stufen Toleranzen aufweisen, was deren Ausgangssignale bei gegebenen Eingangssignalen betrifft. Solche Toleranzen, insbesondere hinsichtlich der Ausgangsströme der D/A-Stufen, sind natürlich unerwünscht, da hierdurch Kontraständerungen im einzublendenden Bild zwangsweise von Einrichtung zu Einrichtung auftreten.

Der Erfindung liegt daher die Aufgabe zugrunde, diese bekannte Einrichtung so weiterzubilden, daß derartige Toleranzen bei der Kontrasteinstellung eines einzublendenen Bildes zu keiner ungewollten Kontrastveränderung beim einzublendenden Bild führen.

Diese Aufgabe wird erfindungsgemäß durch die kennzeichnenden Merkmale des Anspruchs 1 gelost.

Weiterbildungen der Erfindung sind Gegenstand der Unteransprüche.

Durch die erfindungsgemäß einfache Lösung ist es möglich, den Kontrast des eingeblendeten Bildes entweder selbsttätig an das Großbild anzupassen oder aber den Betrachter z. B. über seine Fernbedienung die Möglichkeit zu geben, den Kontrast individuell einstellen zu können. Durch die digitale Steuerung der Referenzsignale der Digital-Analog-Umsetzstufe ist ein Höchstmaß an Flexibilität zur Kontrasteinstellung gegeben.

Bei der vorliegenden Erfindung können - wie eingangs bereits erwähnt - Bildquellen unterschiedlichster Art für das erste und zweite Bild verwendet werden, beispielsweise Fernsehprogramme, Videokameras oder Videorekorder. Es ist aber auch möglich, Untertitel z. B. für Gehörgeschädigte in ein Hauptbild einzublenden, wie es derzeit im Zusammenhang mit den von den Fernsehanstalten ausgestrahlten Videotext- bzw. Teletextsignalen möglich ist.

Es wird also mit der erfindungsgemäßen Einrichtung in einfacher Weise erreicht, daß der Kontrast des ersten Bildes den Kontrast des zweiten Bildes angepaßt oder aber individuell eingestellt werden kann. Auftretende Kontrastabweichungen aufgrund von Herstellungstoleranzen bei der Chipfertigung der D/A-Stufe können wirksam ausgeglichen werden. Ein solcher Ausgleich kann beispielsweise während eines beliebig wählbaren zeitlichen Fensters durchgeführt werden. Dieses Fenster kann in einen Bereich gelegt werden, in dem auf dem Bildschirm kein Bild dargestellt wird, also z. B. in den Zeilenrücklauf oder Bildrücklauf des Elektronenstrahls.

Damit werden Störungen der Regelung auf ein Minimum reduziert.

Besonders vorteilhaft ist dies bei der Bild-in-Bild-Darstellung, aber auch nützlich bei zeitlich aufeinanderfolgenden Bildsequenzen. So kann der Fernsehzuschauer beispielsweise nach der Betrachtung eines Fernsehprogramms auf eine Videotexttafel umschalten, bei der der Kontrast individuell einstellbar ist, unabhängig davon wie der Kontrast des Fernsehprogramms gewählt ist. Beim "Zurückspringen" zum Fernsehprogramm wird am Fernsehgerät automatisch wieder der Kontrast für das Fernsehprogramm eingestellt.

Um solche Videotextsignale empfangen zu können, muß die Einrichtung zum Empfang von Informationen in Form codierter Zeichen geeignet sein, die über einen Zeichengenerator zu Bildsignalen umformbar sind. Integrierte Schaltungen zum Empfang solcher Videotextsignale sind beispielsweise unter der Bezeichnung SDA 5243 oder SDA 5273 von Siemens bekannt.

Die Erfindung wird im folgenden anhand der Bild-im-Bild-Einblendung im Zusammenhang mit drei Figuren näher erläutert. Es zeigen:

FIG 1   ein Prinzipschaltbild zur Bild-im-Bild-Einblendung mit einer ersten Bildverarbeitungsstufe mit einer ausgangsseitig vorgesehenen Digital-Analog-Umsetzstufe und einer zweiten Bildverarbeitungsstufe sowie einer nachgeschalteten Umschalteinrichtung,

FIG 2   ein Blockschaltbild zur Kontrastregelung beim einzublendenden Bild nach der Erfindung, und

FIG 3   ein detailliertes Schaltbild zu FIG 2.

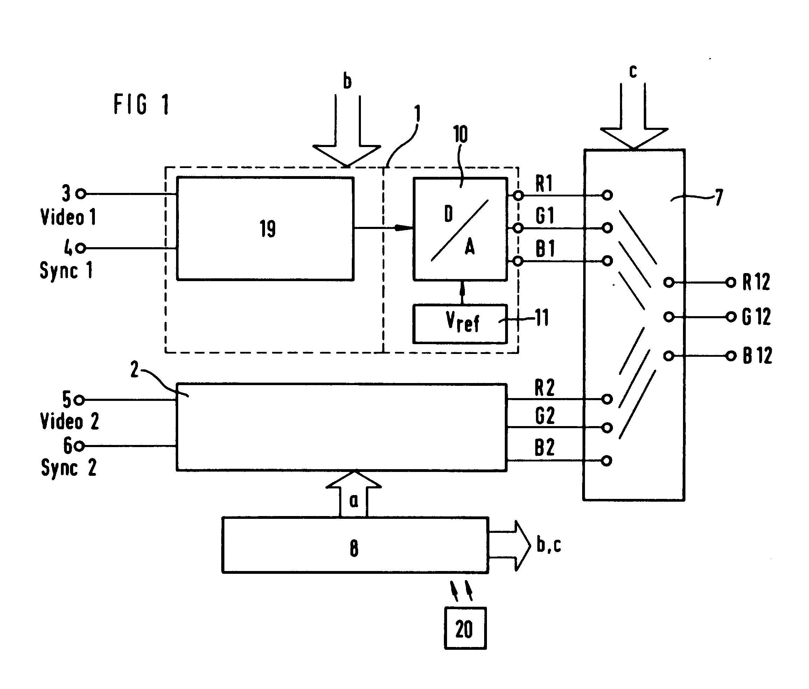

In FIG 1 ist das Prinzipschaltbild zur Bild-im-Bild-Einblendung mit einer ersten Bildverarbeitungsstufe 1 und einer zweiten Bildverarbeitungsstufe 2 gezeigt. Die erste Bildverarbeitungsstufe 1 weist Eingangsklemmen 3, 4 zum Anlegen erster Videosignale Video 1 und dazugehörender Synchronsignale Sync 1 auf. Die zweite Bildverarbeitungsstufe 2 ist mit Eingangsklemmen 5, 6 für zweite Videosignale Video 2 sowie zweite Synchronsignale Sync 2 versehen. An Ausgangsklemmen der ersten Bildverarbeitungsstufe 1 sind erste analoge Bildsignale R1, G1, B1 und an Ausgangsklemmen der zweiten Bildverarbeitungsstufe 2, zweite analoge Bildsignale R2, G2, B2 abgreifbar.

Die ersten und zweiten Bildsignale R1, G1, B1; R2, G2, B2 gelangen an eine Umschalteinrichtung 7, die zeitrichtig zwischen den ersten Bildsignalen R1, G1, B1 und zweiten Bildsignalen R2, G2, B2 umschaltet. Eine Steuereinrichtung 8 ist über mehradrige Verbindungsleitungen a, b, c mit der ersten Bildverarbeitungsstufe 1, zweiten Bildverarbeitungsstufe 2 und Umschalteinrichtung 7 verbunden und sorgt über geeignete Steuersignale zur richtigen Ansteuerung der einzelnen Komponenten.

Die erste Bildverarbeitungsstufe 1 weist einen Bild-im-Bild-Prozessor, z. B. den integrierten Schaltkreis SDA 9088 von Siemens auf, der über eine Signalverarbeitungsstufe 9, die der Bildverkleinerung, der Zwischenspeicherung der digitalen Bilddaten in einem integrierten Bildspeicher sowie der Ausgabe der digitalen Bilddaten des verkleinerten Bildes an Digital-Analog-Umsetzstufe 10 dient. Dabei ist erfindungsgemäß der Digital-Analog-Umsetzstufe 10 ein variables Referenzsignal Vref aus einer Referenzsignalstufe 11 zuführbar, wobei dieses Referenzsignal von der Steuereinrichtung 8 nach Maßgabe digitaler Steuersignale b einstellbar ist. Die Digital-Analog-Umsetzstufe 10 ist ein D/A-Wandler mit schaltbaren Stromquellen, wie dieser als solcher aus Tietze-Schenk, Halbleiter-Schaltungstechnik, 5. Auflage, 1980, unter Punkt 24.2.2 beschrieben ist.

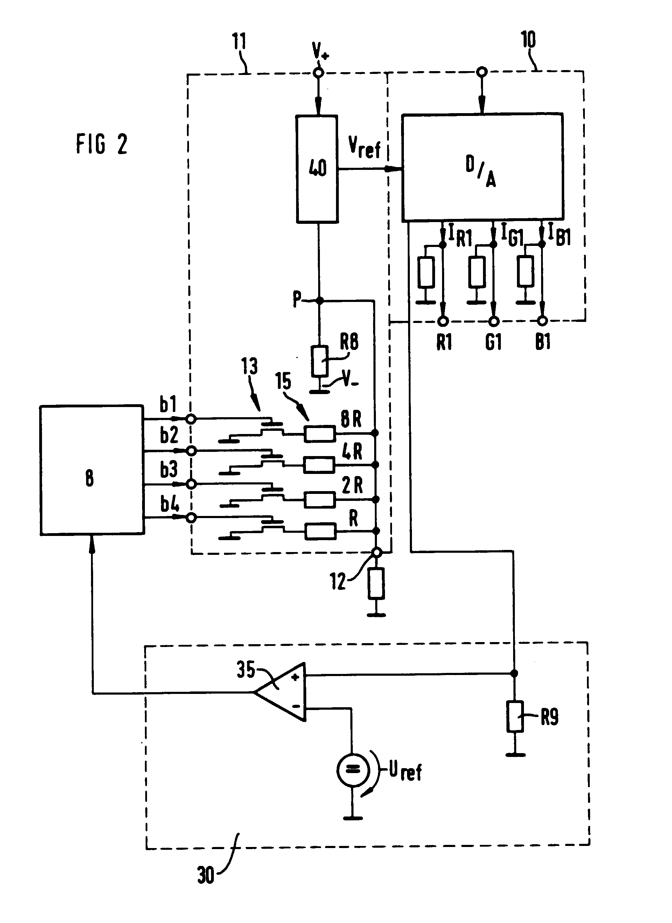

In FIG 2 ist die Referenzsignalstufe 11 sowie eine erfindungsgemäße Einrichtung 30 zum Erfassen einer Amplitudenabweichung von Ausgangsstromsignalen IR1, IG1, IB1 der Digital-Analog-Umsetzstufe 10 von einer vorgegebenen Referenzamplitude und zum Nachregeln der Ausgangsstromsignale IR1, IG1, IB1 der Digital-Analog-Umsetzstufe 10 auf die vorgegebene Referenzamplitude dargestellt. Als Referenzsignal dient eine Referenzspannung Vref, die der Digital-Analog-Umsetzstufe 10 zugeführt wird. Diese Referenzspannung Vref wird am Ausgang einer Referenzspannungserzeugereinrichtung 40 abgegriffen. Die Referenzspannungsstufe 40 liegt hierfür beispielsweise zwischen einem positiven Pol V+, einer Versorgungsspannungsquelle und einer Bezugsspannung V-. Hierfür kann die Referenzspannungstufe 40 in Reihe zu einem Widerstand R8 liegen und zwar derart, daß die Referenzspannungsstufe 40 und der Widerstand R8 zwischen den Klemmen V+, V- geschaltet ist. Der Widerstand R8 liegt mit seinem einen Anschluß auf der Bezugsspannung V- und mit seinem anderen Anschluß an der Referenzspannungsstufe 40. Der Verbindungspunkt zwischen der Referenzspannungsstufe 40 und dem Widerstand R8 ist in FIG 2 mit P bezeichnet.

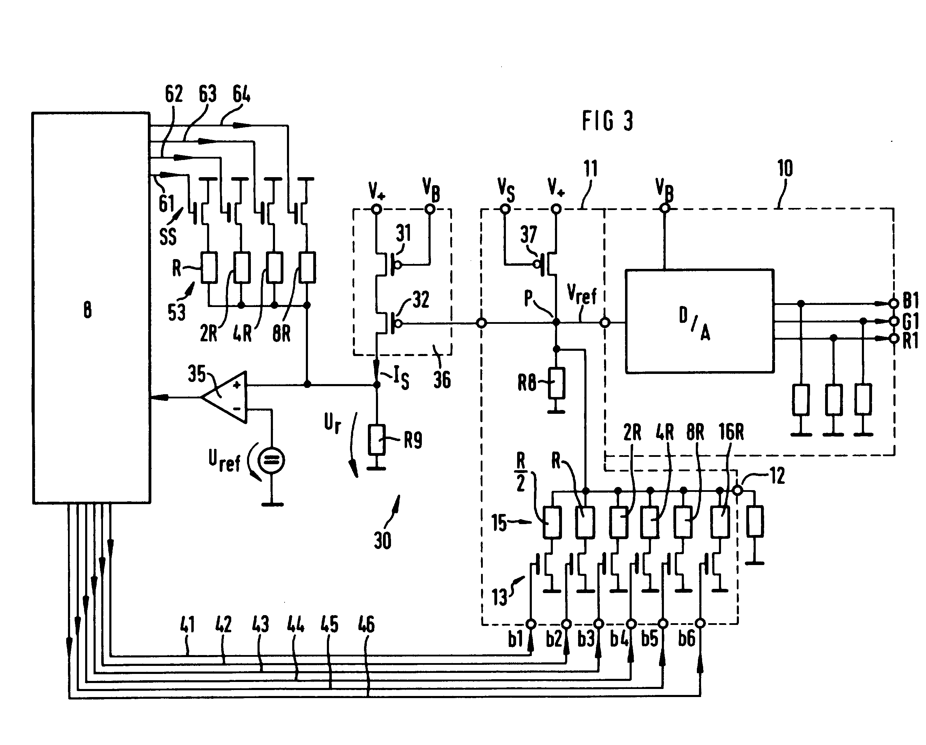

Erfindungsgemäß weist die Einrichtung 30 einen Komparator 35 auf, der ausgangsseitig mit der Steuereinrichtung 8 verbunden ist und an dessen einer Eingangsklemme, d. h. in diesem Ausführungsbeispiel der invertierenden Eingangsklemme -, ein vorgegebenes Referenzsignal Uref anschließbar und an dessen anderer Eingangsklemme, d. h. in diesem Fall der nichtinvertierenden Anschluß des Komparators 35, ein Signal anlegbar ist, das ein Maß für das Ausgangsstromsignal IR1, IG1, IB1 der Digital-Analog-Umsetzstufe 10 darstellt. Im Zusammenhang mit FIG 3 wird noch eingehend erläutert, wie beispielsweise das an die Eingangsklemme + des Komparators 35 anzuschließende Signal gewonnen werden kann.

In FIG 2 ist die Ausgangsklemme des Komparators 35 mit der Steuereinrichtung 8 in Verbindung, die je nach Abweichung zwischen den Signalen an den Eingangsklemmen -, + des Komparators 35 Steuersignale generiert, um das oben erwähnte Spannungssignal Vref der Referenzspannungsstufe 40 so zu variieren bzw. nachzuregeln, daß die Ausgangsstromsignale IR1, IG1, IB1 der Digital-Analog-Umsetzstufe 10 auf eine vorgegebene Referenzamplitude eingestellt werden. Hierzu ist in der Darstellung von FIG 2 eine schaltbare Spannungsteileranordnung vorgesehen, die an den Verbindungspunkt P geschaltet ist. Die Anzahl der schaltbaren Widerstände bestimmt im Wesentlichen die Regelgenauigkeit und kann ungleich der hier dargestellten Anzahl von 4 sein. Im einzelnen weist die Darstellung in FIG 2 hierfür vier zueinander parallel schaltbare Widerstände R, 2R, 4R und 8R auf, die mit ihren einen Anschlüssen an den Verbindungspunkt P angeschlossen sind und mit ihren jeweiligen anderen Anschlüssen über einen steuerbaren Schalter, in diesem Ausführungsbeispiel MOS-Transistoren 13, an die Bezugsspannung V- geschaltet werden können. Hierfür sind die Steueranschlüsse dieser MOS-Transistoren 13 jeweils mit Klemmen b1, b2, b3, b4 verbunden, an die Steuersignale der Steuereinrichtung 8 anlegbar sind. Desweiteren liegt in der Darstellung von FIG 2 der Verbindungspunkt P zusätzlich an einer Ausgangsklemme 12 der ersten Bildverarbeitungsstufe. An dieser Ausgangsklemme 12 ist extern ein auf Bezugspotential V- geschalteter Widerstand anschließbar, wodurch die Referenzspannung Vref zunächst grob festgelegt wird.

Durch eine derartige Anordnung kann die Steuereinrichtung 8 die Widerstände 15 an- und abschalten. Dadurch wird der Referenzstrom des in FIG 2 dargestellten Stromspiegels verändert, der die Referenzspannung Vref für die Digital-Analog-Umsetzstufe 10 erzeugt. Die Widerstandswerte Rn der Widerstände 15 werden entsprechend

$$Rn = R \times 2^{n-1}$$

gewählt.

In FIG 3 ist ein zu FIG 2 detailliertes Schaltbild einer erfindungsgemäßen Einrichtung dargestellt. Um unnötig Wiederholungen zu vermeiden, werden im folgenden nur diejenigen Schaltungsteile erläutert werden, die im Zusammenhang mit FIG 2 noch nicht beschrieben worden sind. Gleiche Bezugszeichen bezeichnen aber weiterhin gleiche Teile.

Die Referenzspannung Vref, die der Digital-Analog-Umsetzstufe 10 zugeführt wird, wird jetzt am Verbindungspunkt P eines Spannungsteilers abgegriffen, der zwischen den Pluspol V+ der Versorgungsspannungsquelle und Bezugsspannung V-, hier Masse, geschaltet ist. Der Spannungsteiler besteht aus einem an den Pluspol V+ der Versorgungsspannungsquelle geschalteten MOS-Transistors 37, dessen Steueranschluß an einer Spannung VS liegt, mit in Reihe geschalteten Widerstand R8. Der Verbindungspunkt P liegt zusätzlich wieder an der Ausgangsklemme 12 der ersten Bildverarbeitungsstufe 1. An dieser Ausgangsklemme 12 ist über einen anzuschließenden Widerstand die Referenzspannung Vref zunächst grob festlegbar. An den Verbindungspunkt P sind jetzt insgesamt sechs parallel schaltbare Widerstände 15 angeschlossen, die mit ihren jeweiligen anderen Anschlüssen über jeweils einen Halbleiterschalter 13 auf Bezugspotential V- liegen, wobei die Steueranschlüsse der Halbleiterschalter 13 mit Klemmen b1, b2, b3, b4, b5 und b6 verbunden sind, an die Steuersignale 41, 42, 43, 44, 45 und 46 der Steuereinrichtung 8 anlegbar sind. Mittels dieser Steuersignale b1 bis b6 können diese Widerstände an- und abgeschaltet werden. Ein Ein- bzw. Ausschalten dieser Widerstände 15 beeinflußt direkt die Referenzspannung Vref des in FIG 3 dargestellten Spannungsteilers.

Bei dem in FIG 3 dargestellten Beispiel haben die Widerstände 15 die Werte 2/R, R, 2R, 4R, 8R und 16R. Durch das Ein- bzw. Ausschalten dieser Widerstände 55 kann die Referenzspannung Vref für die Digital-Analog-Umsetzstufe 10 geändert werden, wodurch sich eine Änderung des Ausgangsstromes der Digital-Analog-Umsetzstufe 10 ergibt, ohne daß sich deren Eigenschaften wesentlich verändern.

Um jedoch Herstellungstoleranzen hinsichtlich der Ausgangsströme IR1, IG1, IB1 in der Digital-Analog-Umsetzstufe 10 ausgleichen zu können und damit eine Referenzkontrastspannung, die für alle Digital-Analog-Umsetzstufen 10 gleich ist, vorsehen zu können, ist ein Nachregeln der Ausgangsstromsignale IR1, IG1, IB1 oft notwendig. Hierfür weist die Darstellung von FIG 3 eine Stromquellenschaltung 36 auf, die eine zu den Stromquellen der Digital-Analog-Umsetzstufe 10 identische Stromquelle enthält. Dieser Stromquellenschaltung 36 wird das variable Spannungssignal Vref als Steuersignal zum Erzeugen eines Ausgangsstromes Is zugeführt. Im einzelnen besteht die Stromquellenschaltung 36 in der Darstellung von FIG 3 aus zwei hintereinandergeschalteten MOS-Transistoren 31, 32 wobei der erste Ausgangsschluß des MOS-Transistors mit dem Pluspol V+ der Versorgungsspannungsquelle und die zweite Ausgangsklemme dieses MOS-Transistors 31 mit einer ersten Ausgangsklemme des MOS-Transistors 32 verbunden ist. Eine zweite Ausgangsklemme dieses MOS-Transistors 32 ist über einen Widerstand R9 mit Bezugsspannung V- in Verbindung. Ein Steueranschluß des MOS-Transistors 31 ist mit einem Anschluß für eine Spannung VB verbunden und ein Steueranschluß des MOS-Transistors 32 ist mit dem Verbindungspunkt P in Verbindung. Damit liegt an dem Steueranschluß des MOS-Transistors 32 auch die Referenzspannung Vref an. Abhängig von der Amplitude dieser Referenzspannung Vref wird in der Stromquellenschaltung 36 ein Strom IS erzeugt. Dieser Strom IS erzeugt am Widerstand R9 einen Spannungsabfall, der als Signal an der nichtinvertierenden Eingangsklemme + des Komparators 35 anliegt. Die Spannung Ur stellt ein Maß für das Ausgangsstromsignal IR1, IG1, IB1 der Digital-Analog-Umsetzstufe 10 dar, wegen der identischen Stromquellenausführung.

Der Ausgang des Komparators 35 ist in der im Zusammenhang mit FIG 2 bereits beschriebenen Weise mit der Steuereinrichtung 8 in Verbindung, die abhängig von der Abweichung zwischen der Spannung Uref und Ur die Widerstände 15 über die Steuerleitungen 41 bis 46 und die MOS-Transistoren 13 so ansteuert, bis die Referenzspannung Vref so groß wie die Spannung Uref ist.

In der Steuereinrichtung 8 kann hierfür beispielsweise ein digitaler Zähler vorgesehen werden, der über die Steuerleitungen 41 bis 46 die MOS-Transistoren 13 so an- oder abschaltet, bis die Spannung Ur am Widerstand R9 gleich der Spannung Uref ist.

Ein Abgleich kann beispielsweise automatisch mit einer Verzögerung nach dem Einschalten der erfindungsgemäßen Einrichtung durchgeführt und jederzeit durch einen geeigneten Steuerbefehl gestartet werden.

Eine individuelle Einstellung des Kontrasts des einzublendenden Bildes ist weiterhin möglich. Hierfür werden von der Steuereinrichtung 8 beispielsweise Widerstände 53 parallel zum Widerstand R9 geschaltet. In der Darstellung von FIG 3 weist hierfür die Einrichtung vier parallel schaltbare Widerstände 53 auf, die mit ihrem einen Anschluß mit der nichtinvertierenden Eingangsklemme + des Komparators 35 in Verbindung stehen und mit ihren anderen Anschlüssen jeweils über einen MOS-Transistor 55 an Bezugspotential V- geschaltet sind. Die Steueranschlüsse dieser MOS-Transistoren 55 sind über Steuerleitungen 61, 62, 63, 64 mit der Steuereinrichtung 8 in Verbindung. Die Widerstandswerte Rm der Widerstände 53 werden entsprechend der Formel

$$Rm = R \times 2^{m-1}$$

gewählt. Bei dem in FIG 3 dargestellten Beispiel haben die Widerstände 53 die Werte R, 2R, 4R und 8R. Über Steuersignale auf den Leitungen 61 bis 64 ist damit beispielsweise eine Kontrastvariation von ± 20% in 16 Stufen möglich.

Vorteilhaft bei der erfindungsgemaßen Einrichtung ist im Vergleich zu einer bisher üblichen Handregelung, daß der Abgleich nur während eines beliebig wählbaren zeitlichen Fensters durchgeführt werden kann. Dieses Fenster kann in einen Zeitbereich gelegt werden, in dem auf dem Bildschirm kein Bild dargestellt wird. Damit werden Störungen der Regelung auf ein Minimum reduziert.

**Patentansprüche**

1. Einrichtung zum Darstellen eines ersten Bildes und eines zweiten Bildes auf einem Bildschirm mit:

   - einer ersten Bildverarbeitungsstufe (1) zum Erzeugen von ersten Bildsignalen (R1, G1, B1) für das erste Bild, die eine Bildspeichereinrichtung (19) zum Zwischenspeichern des ersten Bildes sowie eine an die Bildspeichereinrichtung (19) ausgangsseitig angeschlossene Digital-Analog-Umsetzstufe (10) mit schaltbaren Stromquellen aufweist,
   - einer zweiten Bildverarbeitungsstufe (2) zum Erzeugen von zweiten Bildsignalen (R2, G2, B2) für das zweite Bild und Mitteln zur Kontrasteinstellung des zweiten Bildes,
   - eine Umschalteinrichtung (7) zum Umschalten zwischen den ersten und zweiten Bildsignalen (R1, G1, B1; R2, G2, B2),
   - einen Videosignalprozessor zum Darstellen der ersten und zweiten Bilder auf einem Bildschirm nach Maßgabe der umschaltbaren Bildsignale (R12, G12, B12),
   - eine Steuervorrichtung (8) zum Ansteuern der Umschalteinrichtung (7) sowie zum Erzeugen von Steuersignalen (b1, b2, b3, b4) durch welche Ausgangsstromsignale der Digital-Analog-Umsetzstufe (10) zur Kontraständerung des ersten Bildes in ihrer Amplitude variierbar sind,

   **gekennzeichnet** durch

   - eine Einrichtung (30) zum Erfassen einer Amplitudenabweichung der Ausgangsstromsignale der Digital-Analog-Umsetzstufe (10) von einer vorgegebenen Referenzamplitude und zum Nachregeln der Ausgangsstromsignale (IR1, IG1, IB1) der Digital-Analog-Umsetzstufe (10) auf die vorgegebene Referenzamplitude.

2. Einrichtung nach Anspruch 1,
   **dadurch gekennzeichnet,**
   daß der Einrichtung (30) zum Nachregeln der Ausgangsstromsignale (IR1, IG1, IB1) ein von der Steuereinrichtung (8) variierbares Spannungssignal (Vref) zur Ausgangsamplitudeneinstellung der ersten analogen Bildsignale (B1, G1, R1) zuführbar ist, und daß dieses Spannungssignal (Vref) an einem Verbindungspunkt (P) eines zwischen Versorgungsklemmen (V+, V-) geschalteten Spannungsteilers (14, R8) abgreifbar ist, wobei einem Zweig (R8) des Spannungsteilers (14, R8) n Widerstände (15) parallel schaltbar sind.

3. Einrichtung nach Anspruch 1 oder 2,
   **dadurch gekennzeichnet,**
   daß die Einrichtung (30) einen Komparator (35) aufweist, der ausgangsseitig mit der Steuereinrichtung (8) verbunden ist und an dessen einer Eingangsklemme (-) ein vorgegebenes Referenzsignal (Uref) anschließbar und an dessen andere Eingangsklemme (+) ein Signal anlegbar ist, das ein Maß für das Ausgangsstromsignal der Digital-Analog-Umsetzstufe (10) darstellt.

4. Einrichtung nach Anspruch 3,
**dadurch gekennzeichnet,**
daß das Signal ein Ausgangsstromsignal (IB1, IG1, IR1) der Digital-Analog-Umsetzstufe (10) ist.

5. Einrichtung nach Anspruch 2 und 3,
**dadurch gekennzeichnet,**
daß eine Stromquellenschaltung (36) mit einer zu den Stromquellen der Digital-Analog-Umsetzstufe (10) gleichen Stromquelle vorgesehen ist, daß dieser Stromquellenschaltung (36) das variable Spannungssignal (Vref) als Steuersignal zum Erzeugen eines Ausgangsstromes (Is) zuführbar ist, daß ein von diesem Ausgangsstrom (Is) beaufschlagbarer Referenzwiderstand (R9) vorgesehen ist und eine am Referenzwiderstand (R9) abgreifbare Spannung (Ur) das ein Maß für das Ausgangsstromsignal bildende Signal ist, daß das Referenzsignal (Uref) eine vorgegebene Spannung ist, und daß das variable Spannungssignal (Vref) von der Steuereinrichtung (8) derart variierbar ist, daß die am Referenzwiderstand (R9) abgreifbare Spannung (Ur) gleich der vorgegebenen Spannung (Uref) am Komparator (35) wird.

6. Einrichtung nach einem der Anspüche 1 bis 5,
**dadurch gekennzeichnet,**
daß durch die Steuervorrichtung (8) ein Zeitfenster für das Erfassen und Nachregeln vorgebbar ist, bei der keine Bildsignale am Bildschirm sichtbar sind und in diesem Zeitfenster die Nachregelung erfolgt.

7. Einrichtung nach Anspruch 6,
**dadurch gekennzeichnet,**
daß dieses Zeitfenster in die Zeitspanne fällt, in der ein Kathodenstrahl des Bildschirmes zu einem Zeilenanfang oder zum Bildanfang zurückspringt.

8. Einrichtung nach Anspruch 6,
**dadurch gekennzeichnet,**
daß das Zeitfenster unmittelbar nach einem Einschaltvorgang der Einrichtung gewählt ist.

9. Einrichtung nach einem der Ansprüche 1 bis 8,
**dadurch gekennzeichnet,**
daß zur Kontrasteinstellung der ersten Bildsignale (R1, B1, G1) parallel zum Referenzwiderstand (R9) m-Widerstände (53) durch die Steuereinrichtung (8) parallel schaltbar sind.

10. Einrichtung nach Anspruch 9,
**dadurch gekennzeichnet,**
daß die m-Widerstände (53) jeweils unterschiedliche Widerstandswerte Rm aufweisen, die gemäß Rm = R x 2^{m-1} gewählt sind und m eine ganze Zahl ≥ 2 ist.

**Claims**

1. Device for displaying a first picture and a second picture on a screen, having:

- a first image processing stage (1) for generating first video signals (R1, G1, B1) for the first picture, which stage has a frame store (19) for buffer-storage of the first picture as well as a digital-to-analog conversion stage (10) connected to the output of the frame store (19) and having switchable current sources,
- a second image processing stage (2) for generating second video signals (R2, G2, B2) for the second picture and means for setting the contrast of the second picture,
- a changeover device (7) for changing over between the first and second video signals (R1, G1, B1; R2, G2, B2),
- a video signal processor for displaying the first and second pictures on a screen according to the video signals (R12, G12, B12) which can be changed over,
- a control apparatus (8) for driving the changeover device (7) and for generating control signals (b1, b2, b3, b4) by means of which it is possible to vary the amplitude of output current signals of the digital-to-analog conversion stage (10) for the purpose of changing the contrast of the first picture,

characterized by

- a device (30) for detecting an amplitude deviation of the output current signals of the digital-to-analog conversion stage (10) from a predetermined reference amplitude and for readjusting the output current signals (IR1, IG1, IB1) of the digital-to-analog conversion stage (10) to the predetermined reference amplitude.

2. Device according to Claim 1, characterized in that it is possible to feed to the device (30) for readjusting the output current signals (IR1, IG1, IB1) a voltage signal (Vref), which can be varied by the control device (8) for setting the output amplitude of the first analog video signals (B1, G1, R1), and in that this voltage signal (Vref) can be picked off at a junction point (P) of a voltage divider (14, R8) which is connected between supply terminals (V+, V-), it being possible to connect n resistors (15) in parallel with a path (R8) of the voltage divider (14, R8).

3. Device according to Claim 1 or 2, characterized in that the device (30) has a comparator (35), the output of which comparator is connected to the control device (8), and to one input terminal (-) of which comparator a predetermined reference signal (Uref) can be connected, and to the other input terminal (+) of which comparator a signal can be applied which represents a measure of the output current signal of the digital-to-analog conversion stage (10).

4. Device according to Claim 3, characterized in that the signal is an output current signal (IB1, IG1, IR1) of the digital-to-analog conversions stage (10).

5. Device according to Claim 2 and 3, characterized in that a current source circuit (36) having a current source which is identical to the current sources of the digital-to-analog conversion stage (10) is provided, in that the variable voltage signal (Vref) can be fed to this current source circuit (36) as control signal for generating an output current (Is), in that a reference resistor (R9) to which this output current (Is) can be applied is provided, and a voltage (Ur) which can be picked off at the reference resistor (R9) is the signal forming a measure of the output current signal, in that the reference signal (Uref) is a predetermined voltage, and in that the variable voltage signal (Vref) can be varied by the control device (8) in such a way that the voltage (Ur) which can be picked off at the reference resistor (R9) becomes equal to the predetermined voltage (Ur) at the comparator (35).

6. Device according to one of Claims 1 to 5, characterized in that a time window for the detection and readjustment can be predetermined by the control apparatus (8), during which time window no video signals are visible on the screen and the readjustment takes place in this time window.

7. Device according to Claim 6, characterized in that this time window falls within the time interval in which a cathode ray of the screen jumps back to the beginning of a line or to the beginning of the picture.

8. Device according to Claim 6, characterized in that the time window is chosen immediately after a switch-on operation of the device.

9. Device according to one of Claims 1 to 8, characterized in that m resistors (53) can be connected in parallel with the reference resistor (R9) by the control device (8) for the purpose of setting the contrast of the first video signals (R1, B1, G1).

10. Device according to Claim 9, characterized in that the m resistors (53) each have different resistances Rm, which are chosen in accordance with $Rm = R \times 2^{m-1}$ and m is an integer $\geq 2$.

## Revendications

1. Dispositif pour visualiser sur un écran une première image et une seconde image comprenant :

   - un premier étage de traitement d'image (1) qui est destiné à produire des premiers signaux d'image (R1, G1, B1) pour la première image et qui comporte un dispositif de mémorisation d'image (19) pour la mémorisation intermédiaire de la première image ainsi qu'un étage convertisseur numérique-analogique (10) raccordé en sortie au dispositif de mémorisation d'image (19) et comportant des sources de courant pouvant être branchées,
   - un second étage de traitement d'image (2) qui est destiné à produire des seconds signaux d'image (R2, G2, B2) pour la seconde image et des moyens pour le réglage du contraste de la seconde image,
   - un dispositif de commutation (7) qui est destiné à commuter entre les premiers et les seconds signaux d'images (R1, G1, B1 ; R2, G2, B2),
   - un processeur de signaux vidéo qui est destiné à visualiser la première et la seconde image sur un écran en fonction des signaux d'image pouvant être commutés (R12, G12, B12),
   - un dispositif de commande (8) qui est destiné à commander le dispositif de commutation (7) et à produire des signaux de commande (b1, b2, b3, b4) par l'intermédiaire desquels des signaux de courants de sortie de l'étage convertisseur numérique-analogique (10) peuvent être modifiés en amplitude en vue de la variation du contraste de la première image,

   caractérisé par

   - un dispositif (30) qui est destiné à détecter un écart d'amplitude des signaux de courants de sortie de l'étage convertisseur numérique-analogique (10) par rapport à une amplitude de référence prescrite et à effectuer une post-régulation des signaux de courants de sortie (IR1, IG1, IB1) de l'étage convertisseur numérique-analogique (10) sur l'amplitude de référence prescrite.

2. Dispositif selon la revendication 1, caractérisé par le fait que le dispositif (30) pour la post-régulation des signaux de courants de sortie (IR1, IG1, IB1) peut recevoir un signal de tension (Vref), pouvant être modifié par le dispositif de commande (8), en vue du réglage de l'amplitude de sortie des premiers signaux d'image analogiques (B1, G1, R1) et que ce signal de tension (Vref) peut être prélevé à un point de jonction (P) d'un diviseur de tension (14, R8) branché entre des bornes d'alimentation (V+, V-), n résistances (15) pouvant être branchées en parallèle avec une branche (R8) du diviseur de tension (14, R8).

3.  Dispositif selon la revendication 1 ou 2, caractérisé par le fait que le dispositif (30) comporte un comparateur (35) qui est relié en sortie au dispositif de commande (8), à une borne d'entrée (-) duquel peut être appliqué un signal de référence (Uref) prescrit et à l'autre borne d'entrée (+) duquel peut être appliqué un signal qui représente une mesure pour le signal de courant de sortie de l'étage convertisseur numérique-analogique (10).

4.  Dispositif selon la revendication 3, caractérisé par le fait que le signal est un signal de courant de sortie (IB1, IG1, IR1) de l'étage convertisseur numérique-analogique (10).

5.  Dispositif selon la revendication 2 ou 3, caractérisé par le fait qu'il est prévu un circuit à source de courant (36) ayant une source de courant identique aux sources de courant de l'étage convertisseur numérique-analogique (10), que ce circuit à source de courant (36) peut recevoir le signal de tension variable (Vref) comme signal de commande pour la production d'un courant de sortie (Is), qu'une résistance de référence (R9) pouvant être alimentée par ce courant de sortie (Is) est prévue et une tension (Ur) pouvant être prélevée à la résistance de référence (R9) est le signal formant une mesure pour le signal de courant de sortie, que le signal de référence (Uref) est une tension prescrite, et que le signal de tension variable (Vref) peut être modifié par le dispositif de commande (8) de telle sorte que la tension (Ur) pouvant être prélevée à la résistance de référence (R9) est égale à la tension prescrite (Uref) au comparateur (35).

6.  Dispositif selon l'une des revendications 1 à 5, caractérisé par le fait qu'un créneau temporel destiné à la détection et à la post-régulation peut être prescrit par le dispositif de commande (8), créneau pendant lequel aucun signal d'image n'est visible sur l'écran, la post-régulation s'effectuant dans ce créneau temporel.

7.  Dispositif selon la revendication 6, caractérisé par le fait que ce créneau temporel tombe dans l'intervalle de temps pendant lequel un rayon cathodique de l'écran retourne à un début de ligne ou à un début d'image.

8.  Dispositif selon la revendication 6, caractérisé par le fait que le créneau temporel est choisi immédiatement après une opération de mise en marche du dispositif.

9.  Dispositif selon l'une des revendications 1 à 8, caractérisé par le fait que, pour le réglage du contraste des premiers signaux d'image (R1, B1, G1), m résistances (53) peuvent être branchées par le dispositif de commande (8) en parallèle avec la résistance de référence (R9).

10. Dispositif selon la revendication 9, caractérisé par le fait que les m résistances (53) présentent toutes des valeurs résistives Rm différentes qui sont choisies selon la formule $Rm = R \times 2^{m-1}$, m étant un nombre entier supérieur ou égal à 2.

FIG 1

EP 0 621 729 B1

FIG 2

FIG 3